# EUROPEAN PATENT SPECIFICATION

(11) **EP 0 593 715 B1**
(45) Date of publication and mention of the grant of the patent: **22.05.1996**
(21) Application number: 93909399.3
(22) Date of filing: 28.04.1993
(51) Int. Cl.: F16D 13/64, F16D 13/68

(54) **A FRICTION CLUTCH**
REIBUNGSKUPPLUNG
EMBRAYAGE A FRICTION

(30) Priority: 06.05.1992 GB 9209785
(43) Date of publication of application: 27.04.1994
(73) Proprietor: AUTOMOTIVE PRODUCTS PLC, Leamington Spa Warwickshire CV31 3ER (GB)
(72) Inventor: SIMMONDS, Robert Antony, Leamington Spa, Warwickshire CV31 1FL (GB); NASH, Ian Antony, Warwick, Warwickshire CV34 5HB (GB)
(74) Representative: Morrall, Roger
(86) International application number: GB9300881
(87) International publication number: WO9322578

(56) References cited:
- DE-A- 3 540 290
- DE-A- 3 609 051
- DE-A- 4 016 461
- FR-A- 2 623 862
- US-A- 3 972 395
- PATENT ABSTRACTS OF JAPAN vol. 16, no. 262 (M-1265)15 June 1992, & JP-A-40 64 737 (AISIN) 28 February 1992

## Description

The present invention relates to friction clutches for motor vehicles, and in particular but not exclusively to multiplate friction clutches.

GB-A-2212870 discloses a multiplate friction clutch comprising a plurality of drive plates rotationally fast with the cover and a plurality of driven plates which are rotationally fast with a hub and which are located between the drive plates. The drive plates and driven plates are annular plates formed from a so-called carbon/carbon composition, that is a carbon based matrix such as carbon fibres filled with a carbon based filler. Typically the plates have notches or slots formed in one of the inner and outer peripheries for engaging rotationally fast with either the cover or the hub for rotational movement with the respective cover or hub.

The drive surfaces of the notches in the friction facings are subject to wear.

Carbon/carbon friction facings are machined to shape, and one means of overcoming the problem is to redensify the carbon/carbon facings after machining by CVD techniques (carbon vapour deposition), and remachine the friction surfaces to obtain the required friction properties, whilst leaving the densified drive surfaces.

This is an expensive process requiring specialist carbon fibre manufacturing equipment.

US-A-3972395 discloses a carbon/carbon friction plate having drive notches which are reinforced by metal plates. Whilst this can have advantages, wear of the carbon/carbon notch drive surfaces still takes place.

Accordingly there is provided a motor vehicle clutch annular friction plate formed from a carbon/carbon composition and having drive notches on at least one of its inner or outer peripheries which in use engage rotationally fast with a clutch member, the plate being characterised in that the drive surfaces of said notches being coated in a metallic layer by plating a layer of metal thereon to provide a wear resistant metallic layer bonded to the carbon/carbon plate to be integral therewith.

The metal is preferably a coating of an electroless deposition of metal, preferably electroless nickel, which may or may not include additives such as PTFE, and the electroless nickel may be further plated using electro deposition techniques to apply a further layer of metal, preferably chromium plating, or may be further coated by the deposition of electroless nickel with additives.

Also according to the invention there is provided a method of manufacture of an annular carbon/carbon friction clutch drive plate having drive notches on at least one of the inner or outer peripheries thereof, the method being characterised by coating drive surfaces of the drive notches with a metallic layer using electroless plating techniques.

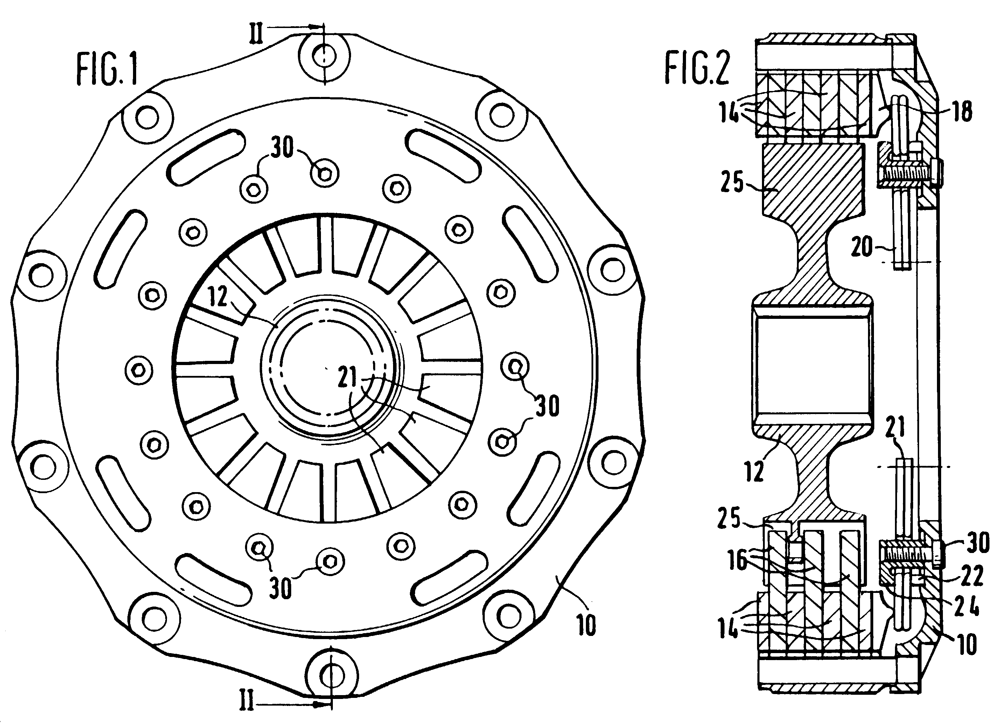

Preferred embodiments of the present invention will now be described by way of example only with reference to the accompanying drawings in which:-
Fig 1 is an elevation of a clutch cover assembly according to the invention;
Fig 2 is a section on line II-II of Fig 1.
Fig 3 is a plan view of a driven plate for use in a multiplate clutch,
Fig 4 is a section on line IV-IV of Fig 3.
Fig 5 and Fig 6 are plan views of drive plates for use in a multiplate clutch.

A multiplate clutch assembly, particularly of the type used in racing cars, comprises a cover 10 which in use is mounted on a flywheel (not shown) and a hub 12 mounted on a gearbox input shaft (not shown). Four annular drive plates 14 are mounted on the cover 10 such that they can slide axially along it but are rotationally fast with it. Three annular driven plates 16 are mounted on the hub 12 such that they can slide axially along it but are rotationally fast with it. The drive plates 14 and the driven plates 16 overlap such that they can frictionally engage to transmit torque between the cover 10 and hub 12. The plates 14 and 16 are formed from a carbon-carbon composition.

A pressure plate 18 engages the drive plate furthest from the flywheel, and at least one diaphragm spring 20 is mounted on the cover such that it reacts between the cover 10 and the pressure plate 18 to urge the drive plates 14 and driven plates 16 towards the flywheel. In this case there are two diaphragm springs mounted one on top of the other. Each diaphragm spring 20 has an outer annular section having radially inwardly projecting spring fingers 21 thereon. There are sixteen spring fingers 21 which are spaced circumferentially apart with apertures between adjacent pairs of spring fingers at the base of the spring fingers. The springs 20 are mounted on the cover 10 between a first fulcrum 22 and a second fulcrum ring 24 which is fixed to the cover by bolts 30.

The hub has a plurality of circumferentially spaced radially outwardly extending teeth or spokes 25 that engage in notches 34 on the inner periphery margin 35 of a driven plate 16.

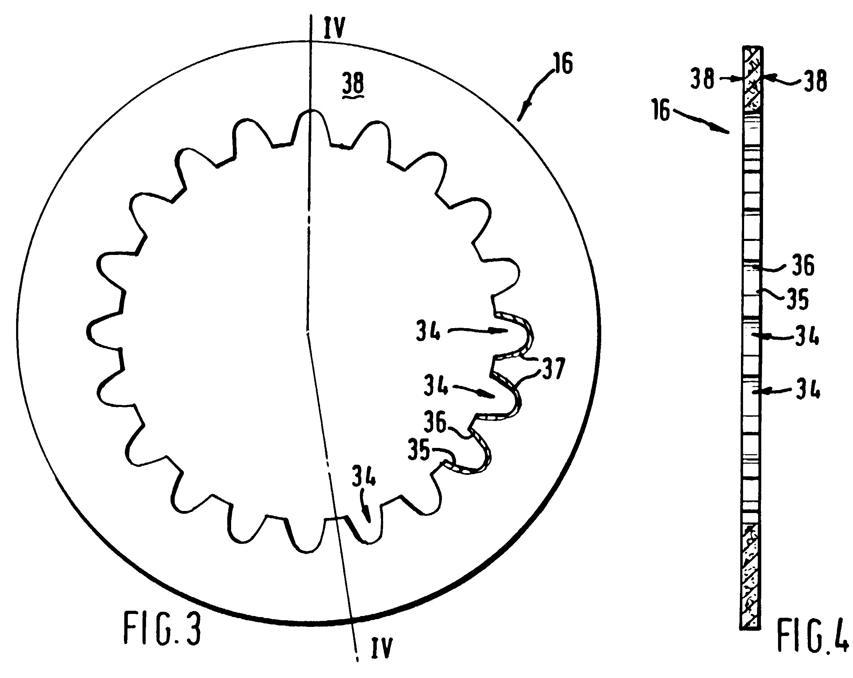

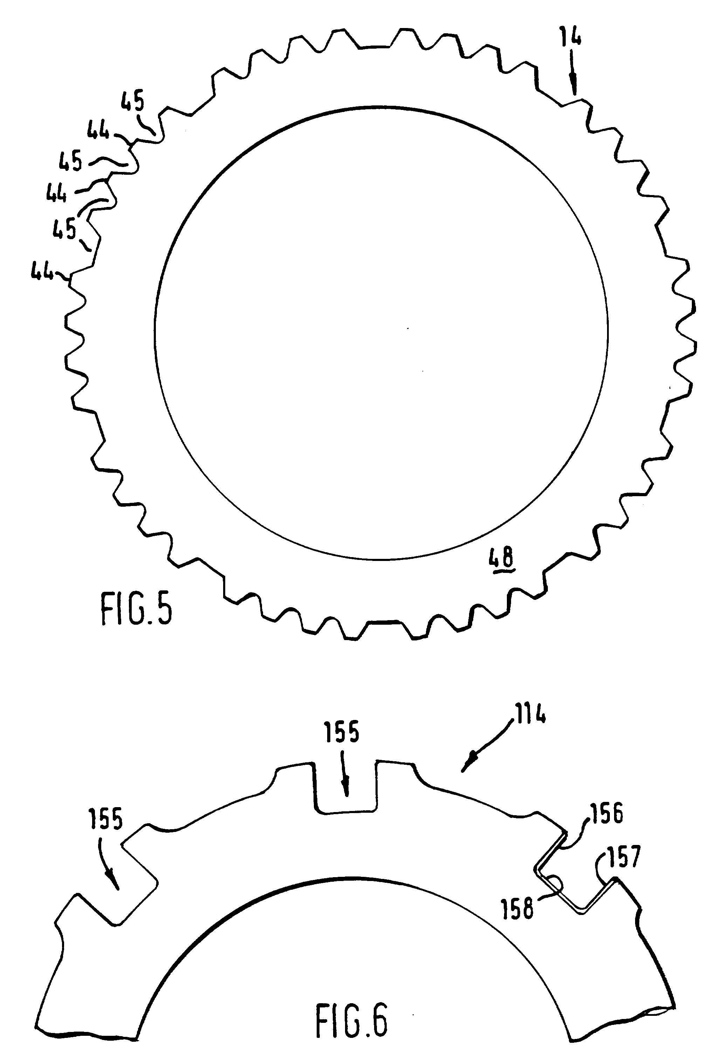

A driven plate 16 is shown in Figs 3 and 4 and comprises an annular carbon/carbon disc having a plurality of notches 34 engageable with the teeth or spokes 25 on the hub (as previously described). The notches 34 have drive surfaces 35,36 that engage the hub teeth 25. The surface of each notch 34 including the drive surfaces 35,36 is coated in a metal layer 37 (only three shown for convenience). The plate has radially outer friction surfaces 38 for engagement with the drive plates 14.

A drive plate 14 is shown in Fig 5 which has drive teeth 44 on its outer periphery spaced by notches 45 for engaging the clutch cover 10. Again the drive surfaces of the notches are teeth and coated in a metallic layer. The plates 14 has a radially inner friction surface 48.

An alternative design of drive plate 114 is shown in Fig 6. In this embodiment notches 155 in the outer peripheral margin of the plate are larger and more widely spaced. The drive surfaces 156, 157, and notch root 158 are again coated with a metal layer.

The carbon/carbon plates 14,16,114, are coated by electroless plating of the whole surface preferably electroless nickel plating but copper plating could be used. If desired the friction faces of the plates could be masked. The electroless nickel coated plates could be heat treated at about 300-400 degrees centigrade to harden the nickel coating.
Alternatively the electroless nickel is coated by chrome plating in the conventional manner by electro deposition.

Other coatings such as nickel alloys or electroless nickel containing additives in suspension such as PTFE (polytetra-fluro ethylene), the so called Niflor (trade mark of Surface Technology plc, Coventry, England) process, could be plated onto the electroless nickel.

Because of the porous nature of the carbon/carbon plates the electroless nickel is absorbed into the surface of the plate especially any exposed radial and circumferential surfaces.

The plating or coating is then machined from the friction surfaces of the drive plates and driven plates.

Alternatively the areas to be left free of plating can be masked during the plating process.

## Claims

1. A motor vehicle clutch annular friction plate (14,16,114) formed from a carbon/carbon composition and having drive notches (34,45,115) on at least one of its inner or outer peripheries which in use engage rotationally fast with a clutch member (12,10), the plate being characterised in that drive surfaces (35,36,156,157) of said notches being coated in a metallic layer (37) by plating a layer of metal thereon to provide a wear resistant metal layer bonded to the carbon/carbon plate to be integral therewith.

2. A friction plate (14,16,114) as defined in claim 1 in which the metallic layer is applied by electroless techniques.

3. A friction plate (14,16,114) as defined in any previous claim in which the metallic layer is nickel.

4. A friction plate (14,16,114) as defined in claim 3 in which the nickel layer is hardened.

5. A friction plate (14,16,114) as claimed in any previous claim, wherein the metallic layer has a further metallic layer deposited thereon.

6. A friction plate (14,16,114) as claimed in Claim 5 wherein the metallic layer comprises electroless nickel and the further metallic layer is deposited thereon by electro chemical deposition techniques.

7. A friction plate as claimed in claim 5 wherein the metallic layer is electroless nickel and the further metallic layer is a layer of PTFE filled electroless nickel.

8. A method of manufacture of an annular carbon/carbon friction clutch drive plate (14,16,114) having drive notches (34,45,115) on at least one of the inner or outer peripheries thereof, the method being characterised by coating drive surfaces (35,36,156,157) of the drive notches with a metallic layer (37) using electroless plating techniques.

9. A method as claimed in Claim 8, comprising the additional step of coating the metallic layer with a further metallic layer containing additives in suspension which is also deposited thereon using electroless plating techniques.

10. A method as claimed in claim 9 wherein the additives are polytetrafloroethelene (PTFE).

11. A method as claimed in claim 9 or 10 wherein the metallic layer is electroless nickel.

12. A method as claimed in claim 11 wherein the metallic layer is hardened.

## Patentansprüche

1. Ringförmige Mitnehmerplatte (14, 16, 114) für eine Kraftföhrzeugkupplung, die aus einer Kohlenstoff-Kohlenstoff-Zusammensetzung gebildet wird und auf wenigstens dem inneren oder dem äußeren Umfang Mitnehmerkerben (34, 45, 115) hat, die bei Nutzung drehend schnell mit einer Kupplungshälfte (12, 10) zum Eingriff kommen, wobei die Platte dadurch gekennzeichnet ist, daß Mitnehmerflächen (35, 36, 156, 157) der Kerben durch das Plattieren derselben mit einer Metallschicht mit einer metallischen Schicht (37) überzogen sind, um eine verschleißbeständige Metallschicht zu bilden, die an die Kohlenstoff-Kohlenstoff-Platte gebunden und integral mit dieser ist.

2. Mitnehmerplatte (14, 16, 114) nach Anspruch 1, bei der die metallische Schicht durch autokatalytische Techniken aufgebracht wird.

3. Mitnehmerplatte (14, 16, 114) nach einem der vorhergehenden Ansprüche, bei dem die metallische Schicht Nickel ist.

4. Mitnehmerplatte (14, 16, 114) nach Anspruch 3, bei der die Nickelschicht gehärtet wird.

5. Mitnehmerplatte (14, 16, 114) nach einem der vorhergehenden Ansprüche, bei der auf die metallische Schicht eine weitere metallische Schicht aufgebracht wird.

6. Mitnehmerplatte (14, 16, 114) nach Anspruch 5, bei der die metallische Schicht autokatalytisch aufgebrachtes Nickel umfaßt und die weitere metallische Schicht auf diesem durch elektrochemische Plattierungstechniken aufgebracht wird.

7. Mitnehmerplatte nach Anspruch 5, bei der die metallische Schicht autokatalytisch aufgebrachtes Nickel ist und die weitere metallische Schicht eine Schicht aus mit PTFE-versetztem, autokatalytisch aufgebrachten Nickel ist.

8. Verfahren zur Herstellung einer ringförmigen Kohlenstoff-Kohlenstoff-Mitnehmerplatte (14, 16, 114) einer Reibungskupplung, die Mitnehmerkerben (34, 45, 115) auf wenigstens dem inneren oder dem äußeren Umfang hat, wobei das Verfahren gekennzeichnet ist durch das Überziehen der Mitnehmerflächen (35, 36, 156, 157) der Mitnehmerkerben mit einer metallischen Schicht (37) unter Anwendung von autokatalytischen Plattierungstechniken.

9. Verfahren nach Anspruch 8, das den zusätzlichen Schritt der Beschichtung der metallischen Schicht mit einer weiteren metallischen Schicht, die Zusätze in Suspension enthält, umfaßt, die ebenfalls unter Anwendung von autokatalytischen Plattierungstechniken auf diese aufgebracht wird.

10. Verfahren nach Anspruch 9, bei dem die Zusätze Polytetrafluorethylen (PTFE) sind.

11. Verfahren nach Anspruch 9 oder 10, bei dem die metallische Schicht autokatalytisch aufgebrachtes Nickel ist.

12. Verfahren nach Anspruch 11, bei dem die metallische Schicht gehärtet wird.

## Revendications

1. Plateau d'embrayage à friction annulaire (14, 16, 114) pour un véhicule à moteur, composé d'une composition carbone/carbone et comportant des entailles d'entraînement (34, 45, 115) sur au moins une de ses périphéries interne ou externe, s'engageant en service par rotation rapide dans un élément d'embrayage (12, 10), le plateau étant caractérisé en ce que des surfaces d'entraînement (35, 36, 156, 157) desdites entailles sont revêtues d'une couche métallique (37), une couche métallique y étant appliquée pour produire une couche métallique résistante à l'usure reliée au plateau carbone/carbone, de sorte à en faire partie intégrante.

2. Plateau de friction (14, 16, 114) comme défini dans la revendication 1, dans lequel la couche métallique est appliquée par des techniques de dépôt autocatalytique.

3. Plateau de friction (14, 16, 114) comme défini dans l'une quelconque des revendications précédentes, dans lequel la couche métallique est du nickel.

4. Plateau de friction (14, 16, 114) comme défini dans la revendication 3, dans laquelle la couche de nickel est durcie.

5. Plateau de friction (14, 16, 114) selon l'une quelconque des revendications précédentes, dans lequel la couche métallique comporte une couche métallique additionnelle qui y est déposée.

6. Plateau de friction (14, 16, 114) selon la revendication 5, dans lequel la couche métallique comprend du nickel chimique, la couche métallique additionnelle y étant déposée par des techniques de dépôt électrochimique.

7. Plateau de friction selon la revendication 5, dans lequel la couche métallique est composée de nickel chimique, la couche métallique additionnelle étant une couche de nickel chimique chargé de PTFE.

8. Procédé de fabrication d'un plateau de friction d'entraînement d'embrayage annulaire carbone/carbone (14, 16, 114) comportant des entailles d'entraînement (34, 45, 115) sur au moins une des périphéries interne ou externe correspondantes, le procédé étant caractérisé par le revêtement des surfaces d'entraînement (35, 36, 156, 157) des entailles d'entraînement par une couche métallique (37) par l'intermédiaire de techniques de dépôt autocatalytique.

9. Procédé selon la revendication 8, comprenant l'étape additionnelle de revêtement de la couche métallique par une couche métallique additionnelle contenant des additifs en suspension, qui y est déposée également par l'intermédiaire de techniques de dépôt autocatalytique.

10. Procédé selon la revendication 9, dans lequel les additifs sont du polytétrafluoréthylène (PTFE).

11. Procédé selon les revendications 9 ou 10, dans lequel la couche métallique est du nickel chimique.

12. Procédé selon la revendication 11, dans lequel la couche métallique est durcie.
